# EUROPÄISCHE PATENTSCHRIFT

(11) **EP 0 734 658 B1**
(45) Veröffentlichungstag und Bekanntmachung des Hinweises auf die Patenterteilung: **06.12.2000**
(21) Anmeldenummer: 96103892.4
(22) Anmeldetag: 12.03.1996
(51) Int. Cl.: A23L 3/3418, A23B 4/16

(54) **Verfahren zur Reifung von Lebensmitteln**
Process for curing foodstuff
Procédé pour le mûrissement des aliments

(30) Priorität: 27.03.1995 DE 19511223
(43) Veröffentlichungstag der Anmeldung: 02.10.1996
(73) Patentinhaber: Linde Gas AG, 82049 Höllriegelskreuth (DE)
(72) Erfinder: Grupa, Uwe, Dr., 85356 Freising (DE); Benner, Jürgen, 49504 Lotte (DE)
(74) Vertreter: Kasseckert, Rainer

(56) Entgegenhaltungen:
- EP-A- 0 126 996
- EP-A- 0 489 413
- EP-A- 0 520 863
- EP-A- 0 551 158
- WO-A-93/19629
- AU-A- 1 578 370
- FR-A- 2 478 433
- FR-A- 2 595 583
- GB-A- 393 663
- US-A- 3 634 108
- JOURNAL OF THE SCIENCE OF FOOD AND AGRICULTURE, Bd. 67, Nr. 2, Februar 1995, CHICHESTER, SUSSEX, GB, Seiten 143-152, XP000482339 IVOR J. CHURCH ET AL.: "Modified atmosphere packaging technology: a review"

## Beschreibung

Die Erfindung betrifft ein Verfahren zur Reifung von Lebensmitteln, wobei die Lebensmittel in einem unter Luftabschluß gehaltenen Behandlungsraum bei kontrollierter Raumtemperatur und Raumgasfeuchte bis zur Erreichung des gewünschten Reifegrades aufbewahrt werden, wobei dem Behandlungsraum ein Gas oder Gasgemisch zugeführt wird, das einen wesentlich höheren Inertgasgehalt als Luft aufweist, sowie gegebenenfalls Überschußgas aus dem Behandlungsraum abgezogen wird.

Üblicherweise werden Lebensmittel, z.B. Käse oder Schinken zur Reifung einzeln, manuell in einer Vakuumkammermaschine in Plastikfolien verpackt. Anschließend müssen die so verpackten Lebensmittel in Kisten umgelagert und in einen Lagerraum gebracht werden. Dort verbleiben die Lebensmittel, bis ein gewisser Reifegrad erreicht ist. Diese als Folienreifung bekannte Methode ist beispielsweise in der DD-PS 89 775 beschrieben.

Die Folienreifung weist jedoch den Nachteil auf, daß aufgrund des direkten Kontakts Wechselwirkungen zwischen der Verpackung und den Lebensmitteln eintreten können, wodurch die Qualität der Lebensmittel leiden kann. Außerdem sind Beschädigungen der Folienverpackungen durch die Lebensmittel, z.B. durch scharfkantige Knochen oder Gewürz- / Salzpartikel leicht möglich. Undichte Verpackungen können wiederum zu einem mikrobiellen Befall der Lebensmittel oder zu Schimmelwachstum führen. Typischerweise sind 10 bis 25 % jeder Charge von Schimmelwachstum betroffen, wodurch eine zeitraubende Nacharbeit, nämlich Auspacken, Reinigen und Einpacken, notwendig wird. Von Nachteil ist bei der Folienreifung ferner, daß der Reifungsprozeß nicht gesteuert werden kann. Ein Eingriff in den Reifungsprozeß ist nur mit hohem Aufwand möglich. Die Verpackung müßte geöffnet werden, das Produkt bearbeitet, die Verpackung neu begast und schließlich wieder verschweißt werden. Außerdem können keine standardisierten Bedingungen eingehalten werden. Eine ständige On-Line Kontrolle der relevanten Parameter in der Verpackung ist nicht möglich. Das Verpacken und Umlagern der Verpackungen erfordert ferner einen hohen manuellen Aufwand. Schließlich erhält man bei der Folienreifung eine ungleichmäßige Produktqualität, da in jeder Verpackung individuelle Bedingungen herrschen.

Es ist auch die Verwendung von Klimakammern zur Reifung von Lebensmitteln bekannt. Dabei werden die Lebensmittel in einen abgeschlossenen Behandlungsraum eingebracht und bei kontrollierter Raumtemperatur und Raumgasfeuchte bis zur Erreichung des gewünschten Reifegrades aufbewahrt. Zur Aufrechterhaltung der geforderten klimatischen Verhältnisse im Behandlungsraum wird dieser ständig mit konditionierter Luft versorgt, deren Feuchte und Temperatur auf vorbestimmte Werte eingestellt wird. Um einen Eintritt von Keimen und Schimmelpilzen in den Behandlungsraum und damit ein Verderben der Lebensmittel zu vermeiden, muß die Luft außerdem z.B. durch Ozonisierung sterilisiert werden. Ein solches Verfahren zur Reifung in Klimakammern ist beispielsweise in der Zeitschrift "Fleischerei, 36, (8), Seite 589 bis 590" beschrieben.

Derartige Klimakammerverfahren erfordern einen erheblichen Aufwand zur Luftkonditionierung und Luftsterilisierung. Dennoch ist ein teilweises Verderben der Lebensmittel aufgrund mikrobiellen Verfalls oder von Schimmelwachstum sowie das Auftreten oxidativer Reaktionen, wie das bekannte Ranzigwerden der Lebensmittel, nicht immer zu vermeiden.

Aus der WO-A-93 19 629 ist es bekannt, zur Reifung von Käse edelgashaltige Gasgemische einzusetzen, die einen höheren Inertgasgehalt als Luft aufweisen. Der Käse wird dabei in Behälter eingegeben, die von dem Gasgemisch kontinuierlich durchströmt werden.

In der FR-A-2 478 433 ist eine Methode zur Reifung von Fleisch- und Wurstwaren in einem geschossenen Behältnis bei definierter, gesteuerter Temperatur und Feuchtigkeit beschrieben.

Die FR-A-2 595 583 betrifft ein Verfahren zum Konservieren von Lebensmitteln unter einer definierten Gasatmosphäre, deren Sauerstoffgehalt eingestellt wird.

Der vorliegenden Erfindung liegt die Aufgabe zugrunde, ein Verfahren der eingangs genannten Art so auszugestalten, daß eine gleichmäßig hohe Produktqualität der Lebensmittel bei vertretbarem technischen Aufwand erreicht wird.

Diese Aufgabe wird erfindungsgemäß dadurch gelöst, daß
durch Steuerung der Gas- oder Gasgemischzufuhr und gegebenenfalls des Überschußgasabzugs ein dem Reifungsverlauf angepaßter Restsauerstoffgehalt im Behandlungsraum eingestellt wird.

Vorteilhafterweise wird der Restsauerstoffgehalt während der überwiegenden Reifungszeit unter ca. 2 Vol% gehalten.

Bevorzugt wird während der überwiegenden Reifungszeit ein Restsauerstoffgehalt von höchstens 0,5 Vol%, besonders bevorzugt von höchstens 0,1 Vol%, eingehalten.

In der Praxis kann das erfindungsgemäße Verfahren beispielsweise derart ausgeführt werden, daß der Behandlungsraum nach Beladen mit den Lebensmitteln solange mit einem Inertgas, z.B. gasförmigem Stickstoff, beaufschlagt wird, bis ein Restsauerstoffgehalt von unter 2 Vol% im Behandlungsraum erreicht ist. Dann kann die Inertgaszufuhr abgeschaltet werden, so daß ein stationärer Betrieb möglich ist. Der Restsauerstoffgehalt im Behandlungsraum wird ständig überwacht. Bei Überschreiten eines Restsauerstoffgehalts von 2 Vol% wird die Inertgaszufuhr wieder angeschaltet, bis der Restsauerstoffgehalt wieder unter die Grenze von 2 Vol% gefallen ist. Um einen unerwünschten Druckanstieg im Behandlungsraum zu verhindern, wird Überschußgas z.B. über ein Überdruckventil abgelassen. Auf diese Weise ist es möglich, im Behandlungsraum während des gesamten Reifungsverlaufs einen festgelegten Restsauerstoffgehalt einzuhalten. Dabei können Druckschwankungen im Behandlungsraum weitgehend vermieden werden. Im Gegensatz zu herkömmlichen Klimakammerverfahren, bei denen ständig konditionierte Luft zugeführt werden muß, kann das erfindungsgemäße Verfahren unter weitgehend stationären Bedingungen arbeiten, d.h. das Gas bzw. Gasgemisch braucht nur zugeführt zu werden, wenn ein bestimmter Restsauerstoffgehalt im Behandlungsraum überschritten wird. Mit dem erfindungsgemäßen Verfahren können definierte Bedingungen im Behandlungsraum, insbesondere hinsichtlich des Restsauerstoffgehalts und des Gasdrucks, ohne großen technischen Aufwand durch einfache Regelung der Gasversorgung aufrechterhalten werden.

Eine andere bevorzugte Möglichkeit zur Ausführung des Verfahrens besteht darin, anstelle des Sauerstoffgehalts den Gasdruck im Behandlungsraum automatisch zu regeln. Dabei wird im Behandlungsraum ein Überdruck von einigen mbar aufrechterhalten. Der Behandlungsraum wird durch ein kombiniertes Über-/Unterdruckventil abgesichert. Bei Überschreitung eines bestimmten Gasdruckwertes wird durch Öffnen des Überdruckventils der Gasdruck im Behandlungsraum bis auf einen vorgegebenen Richtwert abgesenkt. Bei Absinken des Gasdrucks unter einen vorgegebenen Richtwert wird automatisch Gas oder Gasgemisch dem Behandlungsraum zugeführt, bis der Gasdruck wieder den vorgegebenen Richtwert erreicht. Auf diese Weise wird sichergestellt, daß im Behandlungsraum stets eine stabile Gasatmosphäre aufrechterhalten wird.

Gemäß einer Weiterbildung des Erfindungsgedankens können durch zeitweise Erhöhung des Restsauerstoffgehalts auf bis ca. 5 Vol% fermentative Reifezustände eingestellt werden. Bei einer Gesamtreifezeit von 12 Wochen kann während einer Periode von 2 Tagen bis 3 Wochen ein solcher für die fermentative Reifung förderlicher Restsauerstoffgehalt eingestellt werden, während in der übrigen Reifezeit ein niedrigerer Restsauerstoffgehalt, vorzugsweise unter 2 Vol% eingehalten wird.

Zusätzlich oder alternativ zur Regelung des Gasdrucks im Behandlungsraum kann auch der Inertgasgehalt im Behandlungsraum durch die Gas- oder Gasgemischzufuhr und gegebenenfalls den Überschußgasabzug eingestellt werden.

Vorzugsweise wird auch die Raumgasfeuchte durch Anfeuchten oder Trocknen des Gases oder Gasgemisches eingestellt. Beim Einsatz von Stickstoffgas ist beispielsweise lediglich ein leichtes Anfeuchten notwendig, da Stickstoffgas trocken ist. Hierzu reicht es, das Stickstoffgas durch einen mit Wasser gefüllten Behälter hindurchzuleiten.

Mit Vorteil wird auch die Raumtemperatur im Behandlungsraum durch Temperaturregelung des zugeführten Gases oder Gasgemisches gesteuert.

Gemäß einer besonders bevorzugten Ausführungsform der Erfindung werden der Inertgasgehalt und / oder der Gasdruck im Behandlungsraum in Abhängigkeit vom Reifungsverlauf der Lebensmittel gesteuert.

Auch die Raumgasfeuchte wird vorzugsweise in Abhängigkeit vom Reifungsverlauf der Lebensmittel gesteuert.

Zweckmäßigerweise wird zum Begasen des Behandlungsraums ein Inertgas, insbesondere gasförmiger Stickstoff oder gasförmiges Kohlendioxid, verwendet.

Als vorteilhaft hat es sich auch erwiesen, ein Gasgemisch aus Inertgasen einzusetzen, insbesondere ein Gemisch aus gasförmigem Stickstoff und gasförmigem Kohlendioxid. Dabei ist ein Gemisch aus 20 Vol% Kohlendioxid und 80 Vol% Stickstoff besonders bevorzugt.

Zur Verstärkung der mikrobioziden Wirkung kann auch ein Inertgas oder ein Inertgasgemisch verwendet werden, dem ein säuerndes Gas, insbesondere eine flüchtige organische Säure, zugesetzt wird.

Das erfindungsgemäße Verfahren bietet außerdem die Möglichkeit, das Reifen der Lebensmittel mit anderen Bearbeitungsschritten im Behandlungsraum zu kombinieren. Beispielsweise können die Lebensmittel während der Reifung durch Einleiten eines Kalt- oder Flüssigrauchs in den Behandlungsraum gleichzeitig geräuchert werden.

Auch ein gleichzeitiges Aromatisieren der Lebensmittel ist möglich. Hierzu werden den Lebensmitteln während des Reifevorgangs Gewürz- und/oder Aromastoffe zugegeben.

Besonders gute Reifungsergebnisse werden erzielt, wenn physikalisch und/oder chemisch und/oder fermentativ vorbehandelte Lebensmittel verwendet werden. Eine solche Vorbehandlung kann z.B. im Zerlegen und Würzen der Lebensmittel bestehen.

Die Reifung wird vorzugsweise ohne Zugabe von Nitritpökelsalz zu den Lebensmitteln bis zu einer stabilen Umrötung der Lebensmittel durchgeführt. Im Gegensatz zum Stand der Technik wird ohne Zugabe von Nitritpökelsalz eine stabile und kräftige Umrötung der Lebensmittel nach etwa 4 bis 6 Wochen erreicht. Bei einer konventionellen Reifung ohne Nitritpökelsalz wird erst nach 12 bis 80 Wochen eine stabile Umrötung erzielt, die darüber hinaus nicht so kräftig ist wie bei den erfindungsgemäß behandelten Lebensmitteln.

Beim erfindungsgemäßen Verfahren wird mit Vorteil im Behandlungsraum eine im wesentlichen unbewegte Raumgasatmosphäre aufrechterhalten. Durch diesen quasistationären Zustand werden hohe a_{w}-Werte (Wasseraktivität) ohne Gefahr eines mikrobiellen Befalls der Lebensmittel erreicht. Dadurch wird eine besonders gleichmäßige Trocknung und Reifung der Lebensmittel vom Kern bis zum Außenrand sichergestellt. Im Gegensatz dazu treten bei konventionellen Kammerverfahren mit bewegter Luft typische Trockenränder bei den Lebensmitteln auf.

Das Verfahren weist eine ganze Reihe von Vorteilen auf:

Neben einer hohen Prozeßsicherheit bietet das Verfahren die Möglichkeit einer einfachen Kontrolle der wesentlichen Prozeßparameter, insbesondere der Temperatur, der Raumgasfeuchte und des Restsauerstoffgehalts im Behandlungsraum. Darüber hinaus sind diese Parameter während des Reifungsprozesses leicht einstellbar. Auf diese Weise werden der Reifezeitpunkt und der Reifeverlauf regelbar. Der Prozeßverlauf kann auf einfache Weise an geänderte betriebliche Anforderungen angepaßt werden. Aufwendige manuelle Arbeitsschritte können weitgehend entfallen. Da weniger Nacharbeit am Produkt erforderlich ist, können Kosten und Zeit gespart werden.

Durch die Einstellung der Raumgasfeuchte, der Temperatur und des Inertgasgehalts kann der Gewichtsverlauf der Lebensmittel während des Reifungsprozesses gesteuert werden.

Mit dem erfindungsgemäßen Verfahren wird eine gleichbleibend hohe Produktqualität erreicht. Ein Befall der Lebensmittel mit Schimmelpilzen oder Bakterien kann mit dem erfindungsgemäßen Verfahren weitgehend verhindert werden. Außerdem treten keine oxidativen Reaktionen, wie z.B. das Ranzigwerden der Lebensmittel, auf.

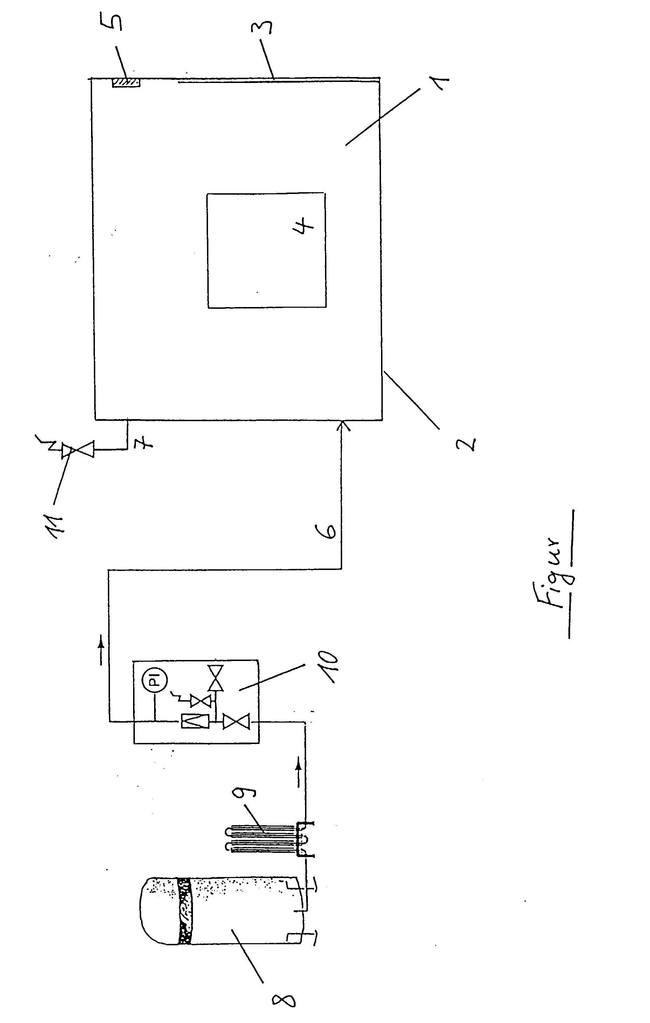

Im folgenden soll die Erfindung anhand von in der Figur schematisch dargestellten Ausführungsbeispielen näher erläutert werden:

Zur Durchführung des Verfahrens ist ein Behandlungsraum 1 vorgesehen, der als Klimakammer mit gasdichten Wänden 2 und einer gasdichten Tür 3 ausgebildet ist. Im Behandlungsraum 1 befindet sich eine Klimatisierungseinrichtung 4, die im wesentlichen aus einer Temperaturregeleinrichtung, im einfachsten Fall einem Ofen, und einer Befeuchtungseinrichtung, im einfachsten Fall einem Wassereimer besteht. Der Behandlungsraum 1 weist außerdem eine Meßeinrichtung 5 zur Bestimmung der Prozeßparameter, insbesondere des Restsauerstoffgehalts im Behandlungsraum auf. Darüber hinaus sind eine Gaszufuhrleitung 6 und eine Überschußgasableitung 7 vorgesehen.

Außerhalb des Behandlungsraums 1 ist ein Stickstoffflüssiggastank 8 angeordnet, der über einen Verdampfer 9 und eine Schalttafel 10 mit der Gaszuleitung 6 in Verbindung steht.

### 1. Ausführungsbeispiel: Schinkenreifung

Im vorliegenden Beispiel soll in der Klimakammer auf übliche Weise vorbehandelter Schinken gereift werden. Hierzu wird der Behandlungsraum 1 mit vier Gestellen Schinken (ca. 1,5 t) zur Reifung unter Stickstoffatmosphäre beladen. Anschließend wird der Behandlungsraum 1 gasdicht geschlossen, um einen Zutritt von Luftsauerstoff zu verhindern. Vom Flüssigstickstofftank 8 wird flüssiger Stickstoff zum Verdampfer 9 geleitet, wo der flüssige Stickstoff verdampft wird. Der gasförmige Stickstoff wird zur Schalttafel 10 weitergeleitet, die für eine automatische Druckregulierung im Behandlungsraum 1 sorgt. Von der Schalttafel 10 wird der gasförmige Stickstoff über die Gaszuleitung 6 in den Behandlungsraum 1 geleitet. Im Behandlungsraum 1 wird der gasförmige Stickstoff über die Befeuchtungseinrichtung geführt, um eine Raumgasfeuchte im Behandlungsraum von 85 bis 90 % einzuhalten.

Im Behandlungsraum 1 wird ein Überdruck von einigen mbar aufrechterhalten. Dadurch wird ein Eindringen von Luft in den Behandlungsraum 1 zuverlässig verhindert. Abgesichert wird der Behandlungsraum 1 durch ein kombiniertes Über-/Unterdruckventil 11 in der Überschußgasleitung 7, um eventuellen Störungen vorzubeugen. Es spricht bei einem Überdruck von 45 mbar und einem Unterdruck von -2 mbar an.

Die Schalttafel 10 wird so eingestellt, daß im Behandlungsraum 1 ein konstanter Gasüberdruck von 15 mbar aufrechterhalten wird.

Die bei dem Reifungsprozeß notwendige Stickstoffmenge wird überwiegend zu Beginn des Reifungsprozesses in den Behandlungsraum 1 eingeleitet. Nach dieser Startinertisierung stellt sich sehr schnell ein Restsauerstoffgehalt von unter 0,5 Vol% ein. Im vorliegenden Ausführungsbeispiel wird nach kurzer Zeit ein Restsauerstoffgehalt von unter 0,1 Vol% erreicht, der während des gesamten Reifungsprozesses nicht überschritten wird. Durch Befeuchtung des zugeführten Stickstoffgases stellt sich außerdem rasch eine Raumgasfeuchte von 85 bis 90 % ein, die während des weiteren Prozeßverlaufs stets in diesem gewünschten Bereich bleibt.

Das Verfahren kommt in der Regel ohne zusätzliche Kühlung aus, da aufgrund des Inertgaseinsatzes und des äußerst niedrigen Restsauerstoffgehalts auch bei erhöhten Temperaturen z.B. 25°C kein Verderben der Lebensmittel durch mikrobiellen Befall oder oxidative Vorgänge zu befürchten ist. Die Temperatur wird auf Werte zwischen 12 und 16°C eingestellt.

Das Verfahren arbeitet weitgehend im stationären Betrieb, es genügt, die gewünschten Parameter einmal einzustellen und durch Überwachung und Nachregeln der Stickstoffzufuhr konstant zu halten. Ein ständiger Gasaustausch wie bei konventionellen Klimakammerverfahren, die mit konditionierter Luft arbeiten, ist nicht notwendig.

Der Schinken wird drei Monate in der Klimakammer unter den beschriebenen kontrollierten Bedingungen aufbewahrt.

Dabei stellt sich folgender Gewichtsverlust ein:

**Tab. 1**

| | **Versuch 1** Schinken Typ A 9 Wochen vorbehandelt | **Versuch 2** Schinken Typ B 18 Wochen vorbehandelt |
|---|---|---|
| | Gewichtsverlust in % | Gewichtsverlust in % |
| Start | 0,0 | 0,0 |
| 4 Wochen | 2,1 | 1,4 |
| 8 Wochen | 3,1 | 1,4 |
| 12 Wochen | 4,1 | 1,4 |
| * Prozentualer Gewichtsverlust bezogen auf das Ausgangsgewicht | | |

Über die relative Feuchte und den Inertgasgehalt im Behandlungsraum 1 kann der Verlauf des Gewichtsverlustes eingestellt werden. Eine Begutachtung der Lebensmittel nach Öffnen der Kammer ergibt, daß kein Mikroorganismenbefall der Lebensmittel festzustellen ist. Die Lebensmittel sind in keiner Weise verdorben. Optischer Eindruck und Geruch des Produktes sind typisch und gut. Ein Vergleich des nach dem erfindungsgemäßen Verfahren gereiften Schinkens mit einem nach einer konventionellen Methode hergestellten Schinken ist in der folgenden Tabelle dargestellt:

**Tab. 2**

| | Erfindung | Stand der Technik |
|---|---|---|
| Farbe | intensiv/kräftig | etwas schwächer/blasser |
| Biß/Konsistenz | fest/mürbe | weicher, etwas feuchter/wäßriger evtl. schwach leimig |
| Geschmack | mild, voll, typisch | deutlich abfallend, weniger intensiv, fade |
| Rauchnote | wie erwartet bei mild geräuchertem Schinken | wie erwartet bei mild geräuchertem Schinken |

Die beschriebene Vorgehensweise ist selbstverständlich nicht nur bei der Schinkenreifung anzuwenden, sondern ist auch auf die Reifung anderer Lebensmittel übertragbar.

### 2. Ausführungsbeispiel: Rohwurstreifung

Eine andere Variante des erfindungsgemäßen Verfahrens wird im Falle der Reifung von Rohwurst dargestellt. Die beschriebene Verfahrensweise läßt sich allerdings auch auf die Reifung anderer Lebensmittel übertragen.

Es wird vorgereifte Rohwurst in den Behandlungsraum 1 eingeladen. Im Gegensatz zum ersten Ausführungsbeispiel wird der Behandlungsraum 1 mit einem Gasgemisch aus 80 Vol% Stickstoff und 20 Vol% Kohlendioxid beaufschlagt. Hierzu ist ein zweiter Flüssiggastank, der flüssiges Kohlendioxid enthält, sowie eine Gasmischeinrichtung zum Vermischen von Stickstoff- und Kohlendioxidgas vorgesehen. Diese zusätzlichen Einrichtungen sind in der Figur nicht dargestellt.

Das Gasgemisch wird über die Schalttafel 10 in den Behandlungsraum 1 eingeleitet. Die Schalttafel 10 wird so eingestellt, daß im Behandlungsraum 1 nach einer kurzen Anfahrzeit während des gesamten Reifungsprozesses ein Restsauerstoffgehalt von unter 0,1 Vol% aufrechterhalten wird. Bei Überschreiten dieses Grenzwertes an der Meßeinrichtung 5 wird die Gaszufuhr über die Schalttafel 10 automatisch erhöht. Die Prozeßparameter Restsauerstoffgehalt, Temperatur, Druck, Feuchte, Stickstoffgehalt und Kohlendioxidgehalt werden über die Meßeinrichtung 5 ständig erfaßt und zur Steuerung des Verfahrens herangezogen. Im vorliegenden Ausführungsbeispiel wird die Temperatur auf ca. 8 bis 16°C, die Feuchte auf ca. 90 % und der Druck auf ca. 20 mbar konstant gehalten. Außerdem wird ein konstantes Stickstoff-/Kohlendioxid-Verhältnis -Verhältnis von 80:20 eingehalten. Etwaige Abweichungen, z.B. von biologischen Prozessen in den Lebensmitteln, werden durch Veränderung der Gaszufuhr, des Gasmischungsverhältnisses, der Temperierung des Gasgemisches und/oder der Befeuchtung des Gasgemisches ausgeglichen.

Um einen gezielten Eingriff in den Reifungsverlauf zu ermöglichen, können diese Prozeßparameter aber auch auf einfache Weise durch Beeinflussung der Gasversorgung (Gasmenge, Gaszusammensetzung, Gasfeuchte, Gastemperatur) in Abhängigkeit vom Reifegrad der Lebensmittel gesteuert werden. Eine solche gezielte Beeinflussung des Reifevorgangs ist mit den herkömmlichen Reifungsmethoden nicht ohne weiteres möglich.

Im vorliegenden Ausführungsbeispiel ergibt sich nach Abschluß des Reifungsverfahrens nach 8,5 Wochen ein gesamter Gewichtsverlust der Rohwurst von 15 %. Im Vergleich dazu ist festzustellen, daß der übliche Gewichtsverlust für Vorhaltung und Transport ca. 15 % in 14 Tagen beträgt. Die erfindungsgemäß gereifte Rohwurst macht einen sehr guten sensorischen Eindruck. Es tritt auch bei der Rohwurst keine Qualitätsminderung auf. Bei konventionellen Verfahren muß die entsprechend vorgereifte Rohwurst nach spätestens 3 bis 4 Wochen verkauft sein, da sonst eine deutliche Qualitätsminderung festzustellen ist. Darüber hinaus ist auch der optische Eindruck der erfindungsgemäß gereiften Rohwurst sehr gut.

## Patentansprüche

1. Verfahren zur Reifung von Lebensmitteln, wobei die Lebensmittel in einem unter Luftabschluß gehaltenen Behandlungsraum bei kontrollierter Raumtemperatur und Raumgasfeuchte bis zur Erreichung des gewünschten Reifegrades aufbewahrt werden, wobei dem Behandlungsraum ein Gas oder Gasgemisch zugeführt wird, das einen höheren Inertgasgehalt als Luft aufweist, sowie gegebenenfalls Überschußgas aus dem Behandlungsraum abgezogen wird, **dadurch gekennzeichnet**, daß
durch Steuerung der Gas- oder Gasgemischzufuhr und gegebenenfalls des Überschußgasabzugs ein dem Reifungsverlauf angepaßter Restsauerstoffgehalt im Behandlungsraum eingestellt wird.

2. Verfahren nach Anspruch 1, dadurch gekennzeichnet, daß der Restsauerstoffgehalt während der überwiegenden Reifungszeit unter ca. 2 Vol% gehalten wird.

3. Verfahren nach Anspruch 2, dadurch gekennzeichnet, daß durch zeitweise Erhöhung des Restsauerstoffgehalts auf bis ca. 5 Vol% fermentative Reifezustände eingestellt werden

4. Verfahren nach einem der Ansprüche 1 bis 3, dadurch gekennzeichnet, daß physikalisch und/oder chemisch und/oder fermentativ vorbehandelte Lebensmittel verwendet werden.

5. Verfahren nach einem der Ansprüche 1 bis 4, dadurch gekennzeichnet, daß die Reifung ohne Zugabe von Nitritpökelsalz zu den Lebensmitteln bis zu einer stabilen Umrötung der Lebensmittel durchgeführt wird.

6. Verfahren nach einem der Ansprüche 1 bis 5, dadurch gekennzeichnet, daß im Behandlungsraum eine im wesentlichen unbewegte Raumgasatmosphäre aufrechterhalten wird.

7. Verfahren nach einem der Ansprüche 1 bis 6, dadurch gekennzeichnet, daß der Inertgasgehalt und / oder der Gasdruck im Behandlungsraum durch Steuerung der Gas- oder Gasgemischzufuhr und gegebenenfalls des Überschußgasabzugs eingestellt werden.

8. Verfahren nach einem der Ansprüche 1 bis 7, dadurch gekennzeichnet, daß die Raumgasfeuchte durch Anfeuchten oder Trocknen des Gas- oder Gasgemisches eingestellt wird.

9. Verfahren nach einem der Ansprüche 1 bis 8, dadurch gekennzeichnet, daß die Raumtemperatur im Behandlungsraum durch Temperaturregelung des zugeführten Gases- oder Gasgemisches gesteuert wird.

10. Verfahren nach einem der Ansprüche 1 bis 9, dadurch gekennzeichnet, daß der Inertgasgehalt und / oder Gasdruck im Behandlungsraum in Abhängigkeit vom Reifungsverlauf der Lebensmittel gesteuert wird.

11. Verfahren nach einem der Ansprüche 1 bis 10, dadurch gekennzeichnet, daß die Raumgasfeuchte im Behandlungsraum in Abhängigkeit vom Reifungsverlauf der Lebensmittel gesteuert wird.

12. Verfahren nach einem der Ansprüche 1 bis 11, dadurch gekennzeichnet, daß als Gas ein Inertgas, insbesondere gasförmiger Stickstoff oder gasförmiges Kohlendioxid, verwendet wird.

13. Verfahren nach einem der Ansprüche 1 bis 11, dadurch gekennzeichnet, daß als Gasgemisch ein Gemisch aus Inertgasen, insbesondere ein Gemisch aus gasförmigem Stickstoff und gasförmigem Kohlendioxid, verwendet wird.

14. Verfahren nach Anspruch 13, dadurch gekennzeichnet, daß ein Gemisch aus 20 Vol% Kohlendioxid und 80 Vol% Stickstoff verwendet wird.

15. Verfahren nach einem der Ansprüche 1 bis 11, dadurch gekennzeichnet, daß als Gasgemisch ein Inertgas oder Inertgasgemisch verwendet wird, dem ein säuerndes Gas, insbesondere eine flüchtige organische Säure zugesetzt wird.

16. Verfahren nach einem der Ansprüche 1 bis 15, dadurch gekennzeichnet, daß die Lebensmittel während der Reifung durch Einleiten eines Kalt- oder Flüssigrauchs in den Behandlungsraum geräuchert werden.

17. Verfahren nach einem der Ansprüche 1 bis 16, dadurch gekennzeichnet, daß den Lebensmitteln während der Reifung Gewürz- und/oder Aromastoffe zugegeben werden.

## Claims

1. Process for maturing foods in which the foods are stored in a treatment chamber which is kept excluded from air and under controlled chamber temperature and chamber gas humidity until the desired degree of maturation is reached, in which the treatment chamber is fed with a gas or gas mixture which has a higher inert gas content than air and, if appropriate, excess gas is taken off from the treatment chamber, characterized in that, by controlling the feed of gas or gas mixture and, if appropriate, the excess gas take-off, a residual oxygen content which is appropriate to the course of maturation is set in the treatment chamber.

2. Process according to Claim 1, characterized in that the residual oxygen content during the majority of the maturation time is kept below approximately 2% by volume.

3. Process according to Claim 2, characterized in that by increasing the residual oxygen content at times to up to approximately 5% by volume, fermentative maturation states are set.

4. Process according to one of Claims 1 to 3, characterized in that foods which have been pretreated physically and/or chemically and/or by fermentation are used.

5. Process according to one of Claims 1 to 4, characterized in that the maturation is carried out up to a stable red pigmentation of the foods without addition of nitrite curing salt to the foods.

6. Process according to one of Claims 1 to 5, characterized in that an essentially non-agitated chamber gas atmosphere is maintained in the treatment chamber.

7. Process according to one of Claims 1 to 6, characterized in that the inert gas content and/or the gas pressure in the treatment chamber is set by controlling the feed of gas or gas mixture and, if appropriate, by controlling the excess gas take-off.

8. Process according to one of Claims 1 to 7, characterized in that the chamber gas humidity is set by moistening or drying the gas or gas mixture.

9. Process according to one of Claims 1 to 8, characterized in that the chamber temperature in the treatment chamber is controlled by closed-loop temperature control of the gas or gas mixture fed.

10. Process according to one of Claims 1 to 9, characterized in that the inert gas content and/or gas pressure in the treatment chamber is controlled as a function of the course of maturation of the foods.

11. Process according to one of Claims 1 to 10, characterized in that the chamber gas humidity in the treatment chamber is controlled as a function of the course of maturation of the foods.

12. Process according to one of Claims 1 to 11, characterized in that the gas used is an inert gas, in particular gaseous nitrogen or gaseous carbon dioxide.

13. Process according to one of Claims 1 to 11, characterized in that the gas mixture used is a mixture of inert gases, in particular a mixture of gaseous nitrogen and gaseous carbon dioxide.

14. Process according to Claim 13, characterized in that a mixture of 20% by volume of carbon dioxide and 80% by volume of nitrogen is used.

15. Process according to one of Claims 1 to 11, characterized in that the gas mixture used is an inert gas or inert gas mixture to which is added an acidifying gas, in particular a volatile organic acid.

16. Process according to one of Claims 1 to 15, characterized in that the foods, during the maturation, are smoked by introducing a cold smoke or liquid smoke into the treatment chamber.

17. Process according to one of Claims 1 to 16, characterized in that seasonings and/or flavourings are added to the foods during the maturation.

## Revendications

1. Procédé pour le mûrissement de denrées alimentaires, dans lequel les denrées alimentaires sont conservées dans une chambre de traitement maintenue à l'abri de l'air, avec une température ambiante et une humidité du gaz ambiant contrôlées jusqu'à l'obtention du degré de maturité désiré, dans lequel on introduit dans la chambre de traitement un gaz ou un mélange gazeux qui présente une teneur en gaz inerte plus élevée que l'air et le cas échéant on extrait un excédent de gaz hors de la chambre de traitement, caractérisé en ce que l'on règle dans la chambre de traitement une teneur en oxygène résiduel adaptée au déroulement du mûrissement, en commandant l'introduction du gaz ou du mélange gazeux et le cas échéant l'extraction de l'excédent de gaz.

2. Procédé suivant la revendication 1, caractérisé en ce que l'on maintient la teneur en oxygène résiduel en dessous d'environ 2 % en volume pendant la plus grande partie du temps de pendant la plus grande partie du temps de mûrissement.

3. Procédé suivant la revendication 2, caractérisé en ce que l'on règle des états de maturité avec fermentation par une augmentation temporaire de la teneur en oxygène résiduel jusqu'à environ 5 % en volume.

4. Procédé suivant l'une quelconque des revendications 1 à 3, caractérisé en ce que l'on utilise des denrées alimentaires prétraitées par voie physique et/ou par voie chimique et/ou par fermentation.

5. Procédé suivant l'une quelconque des revendications 1 à 4, caractérisé en ce que l'on effectue le mûrissement jusqu'à un rougissement stable des denrées alimentaires sans addition de sel nitrité pour saumure.

6. Procédé suivant l'une quelconque des revendications 1 à 5, caractérisé en ce que l'on maintient une atmosphère de gaz ambiant essentiellement immobile dans la chambre de traitement.

7. Procédé suivant l'une quelconque des revendications 1 à 6, caractérisé en ce que l'on règle la teneur en gaz inerte et/ou la pression du gaz dans la chambre de traitement en commandant l'introduction du gaz ou du mélange gazeux et le cas échéant l'extraction de l'excédent de gaz.

8. Procédé suivant l'une quelconque des revendications 1 à 7, caractérisé en ce que l'on règle l'humidité du gaz de la chambre en humidifiant ou en séchant le gaz ou le mélange gazeux.

9. Procédé suivant l'une quelconque des revendications 1 à 8, caractérisé en ce que l'on commande la température ambiante dans la chambre de traitement par une régulation de la température du gaz ou du mélange gazeux introduit.

10. Procédé suivant l'une quelconque des revendications 1 à 9, caractérisé en ce que l'on commande la teneur en gaz inerte et/ou la pression du gaz dans la chambre de traitement en fonction du déroulement du mûrissement des denrées alimentaires.

11. Procédé suivant l'une quelconque des revendications 1 à 10, caractérisé en ce que l'on commande l'humidité du gaz ambiant dans la chambre de traitement en fonction du déroulement du mûrissement des denrées alimentaires.

12. Procédé suivant l'une quelconque des revendications 1 à 11, caractérisé en ce que l'on utilise comme gaz un gaz inerte, en particulier de l'azote gazeux ou du dioxyde de carbone gazeux.

13. Procédé suivant l'une quelconque des revendications 1 à 11, caractérisé en ce que l'on utilise comme mélange gazeux un mélange de gaz inertes, en particulier un mélange d'azote gazeux et de dioxyde de carbone gazeux.

14. Procédé suivant la revendication 13, caractérisé en ce que l'on utilise un mélange gazeux composé de 20 % en volume de dioxyde de carbone et de 80 % en volume d'azote.

15. Procédé suivant l'une quelconque des revendications 1 à 11, caractérisé en ce que l'on utilise comme mélange gazeux un gaz inerte ou un mélange de gaz inertes, auquel on ajoute un gaz acidifiant, en particulier un acide organique volatil.

16. Procédé suivant l'une quelconque des revendications 1 à 15, caractérisé en ce que les denrées alimentaires sont fumées pendant le mûrissement par l'introduction d'une fumée froide ou liquide dans la chambre de traitement.

17. Procédé suivant l'une quelconque des revendications 1 à 16, caractérisé en ce que l'on ajoute des épices et/ou des aromates aux denrées alimentaires pendant le mûrissement.
